Europäisches Patentamt

European Patent Office

Office européen des brevets

(11) Publication number: **0 108 516**
**B1**

## (12) EUROPEAN PATENT SPECIFICATION

(45) Date of publication of patent specification: **24.08.88**

(51) Int. Cl.⁴: **G 09 G 1/16, G 09 G 1/28**

(21) Application number: **83306129.4**

(22) Date of filing: **10.10.83**

(54) **Data selection circuit for the screen display of data from a personal computer.**

(30) Priority: **09.10.82 JP 177990/82**
**12.10.82 JP 179248/82**

(43) Date of publication of application:
**16.05.84 Bulletin 84/20**

(45) Publication of the grant of the patent:
**24.08.88 Bulletin 88/34**

(84) Designated Contracting States:
**DE FR GB**

(56) References cited:
**US-A-4 149 145**

**WESCON TECHNICAL PAPERS, Vol. 26, Sept. 82, pp.33/2, 1-13; J. KHAN:"A VLSI controller for bit-mapped graphic displays"**

(73) Proprietor: **SHARP KABUSHIKI KAISHA**
**22-22 Nagaike-cho Abeno-ku**
**Osaka 545 (JP)**

(72) Inventor: **Eto, Masayuki**
**174-7 Hayakawa-cho**
**Yaita-shi Tochigi-ken (JP)**
Inventor: **Izumi, Kazuyoshi**
**202, The 12th Kohwa Mansions, 136-10**
**Miyukigahara**
**Utsunomiya-shi, Tochigi-ken (JP)**
Inventor: **Kobayashi-Fuyuki**
**2-2-1 Mizuho**
**Utsunomiya-shi Tochigi-ken (JP)**
Inventor: **Kawagishi, Mamoru**
**174-7 Hayakawa-cho**
**Yaita-shi Tochigi-ken (JP)**
Inventor: **Oosawa, Masahiro**
**174-7 Hayakawa-cho**
**Yaita-shi Tochigi-ken (JP)**

(74) Representative: **Wright, Peter David John et al**
**R.G.C. Jenkins & Co. 26 Caxton Street**
**London SW1H 0RJ (GB)**

## Description

This invention concerns a display signal generator for generating video signals for driving a colour raster scan type display screen, for example using digital data from a personal computer. More specifically, it relates to a generator which can mix graphics and text data stored respectively in a graphic display RAM and a text display RAM to produce the video signals to that they represent superimposed images of the graphics and text data.

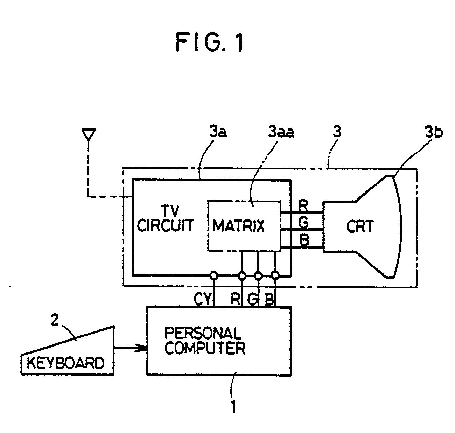

Fig. 1 is a basic conceptional view showing a system for the display of data from a personal computer and is presented as background to this invention. In this system a personal computer 1 incorporates a microcomputer, a keyboard 2 for the input of information into the personal computer 1 and a colour television monitor 3 having a television circuit 3a and raster-scan type CRT 3b driven from the television circuit 3a. When R.G.B signals are applied together with a sync signal (CY) from the personal computer 1 to the colour television monitor 3, data can be displayed by way of a matrix circuit 3aa in the television circuit 3a on the CRT 3b. By the way, the colour television monitor 3 may be a recently commercialized colour television receiver for home use having RGB terminal as well as an exclusive monitor. The data displayed on the monitor screen are those data stored in RAM's incorporated in the personal computer 1.

In the case of displaying dot data on the monitor screen, dots for the screen may be processed dot-by-dot individually or several dots may be processed collectively in a unit of one block. In the case of dot-by-dot processing, if one bit of the data is allocated to one dot, a memory capacity for the number of bits corresponding to the dots is required. For instance, in the case of a 640 × 200 dot screen, memory capacity of 128000 bits is required. When all of the dots of the screen are allocated to the bits of the memory, this memory is called as a graphic RAM. While on the other hand, in a case where several dots are processed in one block, a code corresponding to the block is composed of several bits of data (for instance, 8 bits) and the code data is stored in the memory. This memory is referred to as a text RAM. In this case, the memory capacity can be reduced as compared with the former graphic RAM. For instance, in a case where a 8 dot × 8 dot block is replaced with a code data composed of 8 bits, the number of 64 bits required in the former can be reduced to 8 bits in the later. In the same way, 2000 bits of capacity is sufficient for the case of 640 × 200 dots. The disadvantage in the later system is that it requires a character generator and a parallel-serial converter, and in that it can not perform fine control on each dot.

In a case where the personal computer 1 (Fig 1) has both of the text display RAM and the graphic display RAM, the data from these RAMs are simultaneously outputted by transferring the content in the text display RAM once into the graphic display RAM and, thereafter, reading them out of the graphic display RAM to the screen. The conventional system involves a problem that a considerable amount of time is required for the transfer of the text data and high speed output to the screen is impossible. Furthermore, since the text data are loaded into the graphic RAM, the system lacks a sufficient degree of freedom for superimposing graphics and text data as viewed from the screen, thereby necessarily providing only a monotonous screen display.

The mixing of graphics and text data obtained from respective RAM's to produce video signals of superimposed images is known, for example from WESCON TECHNICAL PAPERS, Volume 26 Sept. 82, J Kahn "A VLS1 controller for bitmapped graphics display". This document discloses in section "2.3 Mixed Mode", a display, signal generator (RAM data selection circuit) comprising a controller (computer/microcomputer/ microprocessor), a graphic display RAM and a text display ROM character generator, the outputs of which are, after simultaneous reading, mixed to provide the video input to a CRT; the method of mixing is not specified.

The present invention seeks to provide a display signal generator which can mix the graphics and text data in a rapid, efficient and controllable manner.

According to the present invention there is provided a display signal generator for generating video signals (RGB) for driving a colour raster scan type display screen, and representing superimposed images of graphics and text data stored in respective memory means, a data selection circuit being coupled to receive graphics and text data from said memory means and operable to mix said graphics and text data so as to produce said video signals (RGB), characterised in that said graphics and text data are read out simultaneously from said memory means and in that said data selection circuit is operable for each picture element on the display screen to select graphics data or text data, said data selection being effected under the control of one of said graphics and text data.

### BRIEF DESCRIPTION OF THE DRAWINGS

This invention will be better understood from the detailed description given hereinbelow and the accompanying drawings which are given by way of illustration only, and thus are not limitative of this invention and wherein:

Fig. 1 is a basic conceptional view showing the background of this invention;

Fig. 2 is a block diagram for a preferred embodiment of this invention;

Fig. 3 is a chart showing a correlationship between RGB outputs and colours in the form of a table; and

Fig. 4 and Fig. 5 are charts showing example of the RGB outputs and the switching signal S for graphic display RAM respectively.

DETAILED DESCRIPTION OF THE INVENTION

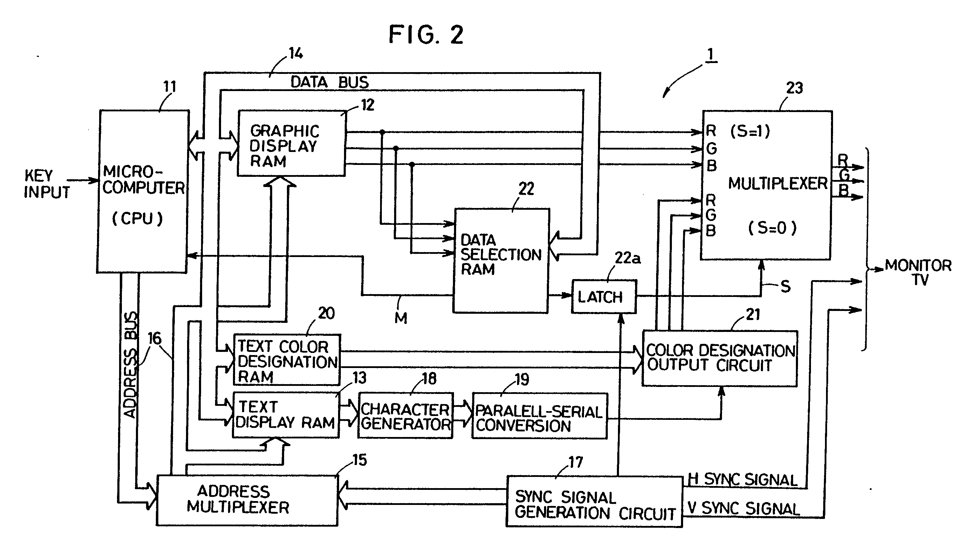

Fig. 2 shows a block diagram for a preferred embodiment of this invention.

A small type electronic computer 1 including a micro-computer (hereinafter referred to as "CPU") 11 supplied with key inputs comprises a graphic display RAM 12 and a text display RAM 13. The graphic display RAM 12 and the text display RAM 13 are connected by way of a data bus 14 to the CPU 11 and by way of an address multiplexer 15 to an address bus 16. Control lines from the CPU 11 are actually connected to both of the RAMs 12, 13 but, since this is a well known control manner, the control lines are not illustrated.

The CPU 11 distinguishes digital signals and, depending on the content thereof, designates addresses to the graphic display RAM 12 and the text display RAM 13 to load therein required data for the display. The address multiplexer 15 functions as a switch for switching the graphic display RAM 12 and the text display RAM 13 to the CPU 11 only when the CPU 11 designates them. In this case, addresses are designated from the address bus 16, and the data are written through the data bus 14 to the graphic display RAM 12 and the text display RAM 13. Since the address multiplexer 15 is switched to the address designation from a sync signal generation circuit 17 in a state where there is no address designation from the CPU 11, then the address is periodically designated from the sync signal generation circuit 17 to the graphic display RAM 12 and the text display RAM 13. In accordance with the designated addresses, the graphic data and the text data are outputted simultaneously.

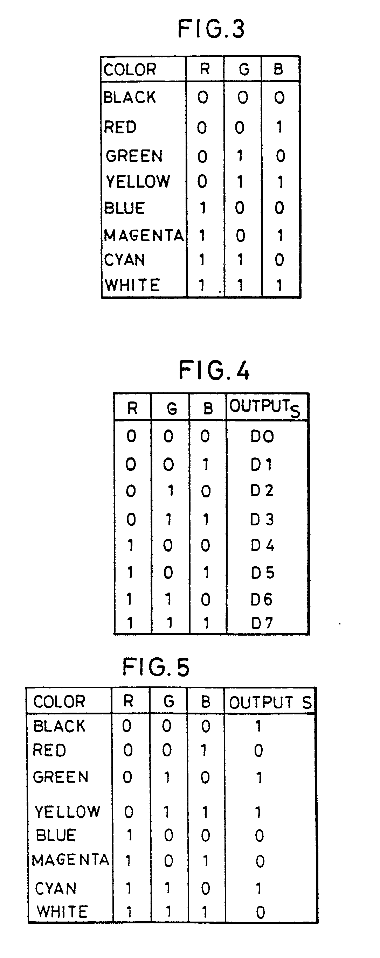

The graphic display RAM is capable of optionally reading and writing as usual and, in this embodiment, 3 bits of the output data correspond to one dot on the CRT screen. The color of the dot is determined by the combination of the 3 bits. The combination of the color is defined in, for instance, as in Fig. 3 in the form of the Table. Furthermore, the text display RAM 13 is also capable of reading and writing at will and 3 bits of its output correspond to one dot. As described above, the text display RAM 13 stores the code data and character data such as an alphanumeric code are outputted from a character generator 18 based on the code issued from the RAM 13. The parallel signals thus issued are converted into serial signals by a parallel-serial converter 19 and inputted into a color designation output circuit 21, by which a color is designated by the unit of a character based on the output data from a text color designation RAM 20 connected to the data bus. It should be noted that 3 parallel bit RGB signals responsive to a predetermined sync signal are corresponded to one dot.

A data selection RAM 22 is written with data in parallel bits from the CPU 11 by way of the data bus 14.

The RAM 22 is also connected to each of the output lines from the graphic display RAM 12 and receives 3 RGB bits from the graphic RAM 12 as the address data. Accordingly, the minimum capacity required for the RAM 22 may be 8 bits. Each of the lines of the data bus 14 is connected as the input data line for each bit. Prior to the display, data are set by way of the data bus 14 to the RAM 22 under the control of the microcomputer 11. The data thus set can be called as a monitor signal M to the microcomputer 11 at any time under the control of the microcomputer 11. Upon screen display, when the data selection RAM 22 is addressed by the 3 RGB bits of the graphic display RAM 12, it selects to output one of the set data. The selected one bit data S is once latched in a latch circuit 22a which receives a predetermined sync signal from the sync signal generation circuit 17 and, thereafter, is inputted to a multiplexer 23 as a data switching means (if the data selection RAM 22 incorporates a latch circuit, it may be used as the latch circuit 22a).

The multiplexer 23 functions to switchingly output either of the output data from the graphic display RAM (3 RGB bits) and the data from the color designation output circuit 21, that is, the data from the text display RAM 13 (3 RGB bits) outputted simultaneously with the output data from the RAM 12 under the control of the 1 bit data S. Specifically, the 1 bit data S forms a switching signal for the data read out from both of the RAMs 12, 13. By applying the single RGB color signal selected and outputted from the multiplexer 23 together with a horizontal sync signal and a vertical sync signal (which may be a composite sync signal) from the sync signal generation circuit 17 to the monitor TV, graphic and/or character color display is made on the CRT screen.

Description will be made with respect to the priority order for the output from the graphic display RAM 12 and from the text display RAM 13 to the screen while referring to Figs. 2, 4 and 5. Assume that the data bus 14 is a 8 bit bus, the signal of bits to be outputted from the 8 bits of the data bus is determined based on the 3 bits inputted now into the data selector 22. The relation between the RGB bits and the output S is shown in Fig. 4 while assuming the data bus bits as D0 - D7 and 3 bit inputs to the data selection RAM 22 as RGB. When the bits D0 - D7 are set by means of the key input or from a program incorporated in the microcomputer 11 by way of the data bus 14 and when RGB bits are outputted from the graphic display RAM 12, it is determined as to whether the signal from the graphic display RAM 12 or the signal from the text display RAM 13 is to be outputted to the monitor TV.

Assume that the signal from the graphic display RAM 12 is outputted if the switching signals S to the miltiplexer 23 is "1" and the signal from the text display RAM 13 is outputted if the switching signal S is "0" and further that selection data "01001101" are given specifically for D0 - D7 from the CPU 11. In this case, the relation between the RGB input and the output S is as shown in Fig. 5. If RGB (= "010") is outputted from the graphic display RAM 12, since the output S is "1", the multiplexer 23 issues the output of the graphic display RAM 12, that is, "010", wherein the green dot is displayed. Then, if RGB (= "111") is issued, since the output S is now "0", the multiplexer 23 issues the output data from the text display RAM 13, for example, "001", wherein the character display on the screen is red.

In this way, the relation for the magnitude or the priority order between the color of the dot from the graphic display RAM 12 and the output from the text display RAM 13 (viewed from the screen) is determined by the data set to the data selection RAM 22. Accordingly, where 8 color bars are outputted and a moving body of a specified color is provisionally moved on the screen, the moving body appears or disappears depending on the kind of the color bars. Fig. 5 shows one example for the input and output, but combinations of $2^8 = 256$ cases are possible for superimposing colors and the text while considering the arrangement of D0 - D7 bits. Thus, there can be provided a large degree of freedom for superimposing the graphic display RAM data and the text display RAM data and, furthermore, such degree can optionally be controlled by the data set from the microcomputer.

In the foregoing embodiment according to this invention, a random access memory is employed as the data selection means for selectively switching the screen data simultaneously read out from the graphic display RAM and from the text display RAM by the dot unit. The data selection means alternatively be a data selector comprising a plurality of latch circuits (composed of individual IC), and other discrete components such as IC, resistors and capacitors in a modified embodiment. However, the data selection means may, desirably, comprise RAM since it enables a more compact circuit structure and the priority order for the data on the screen display can always be monitored from the CPU.

## Claims

1. A display signal generator for generating video signals (RGB) for driving a colour raster scan type display screen, and representing superimposed images of graphics and text data stored in respective memory means (12; 13, 20), a data selection circuit (22, 23) being coupled to receive graphics and text data from said memory means (12; 13, 20) and operable to mix said graphics and text data so as to produce said video signals (RGB), characterised in that said graphics and text data are read out simultaneously from said memory means (12; 13, 20) and in that said data selection circuit (22, 23) is operable for each picture element on the display screen to select graphics data or text data, said data selection being effected under the control of one of said graphics and text data.

2. A display signal generator according to claim 1, characterised in that said data selection circuit comprises means (22) for storing alterable information determining the manner in which the data selection is effected under the control of said one of said graphics and text data.

3. A display signal generator according to claim 1 or claim 2 characterised in that said data selection circuit is adapted to effect said data selection under the control of said graphics data.

4. A display signal generator according to claim 2 characterised in that said storing means comprises a RAM (22) which is arranged to receive the graphics data as an address input to receive said alterable information as a data input.

5. A display signal generator according to claim 2 or claim 4 characterised in that said storing means (22) is adapted to store a code comprising a plurality of bits each associated with a respective particular form of the controlling graphics or text data and each having a value which determines whether the graphics or text data is to be selected.

6. A computer having a display signal generator as claimed in any preceding claim.

## Patentansprüche

1. Bildsignalgenerator zur Erzeugung von Videosignalen (RGB) zur Ansteuerung eines Farbraster-Bildschirmes, die mit Graphik und Text überlagerte Bilder darstellen und in entsprechenden Speichern (12: 13, 20) gespeichert sind, mit einer Datenauswahlschaltung (22, 23), an die die Graphik- und Textdaten der Speicher (12: 13, 20) angelegt sind und die diese Graphik- und Textdaten zur Erzeugung des Videosignales (RGB) mischt, dadurch gekennzeichnet, daß die Graphik- und Textdaten gleichzeitig aus den Speicher (12: 13, 20) ausgelesen werden, und daß durch die Datenauswahlschaltung (22, 23) zur Auswahl von Graphik- oder Textdaten jedes Bildelement des Bildschirmes ansteuerbar ist, wobei die Datenauswahl durch die Graphik- oder Textdaten gesteuert wird.

2. Bildsignalgenerator nach Anspruch 1, dadurch gekennzeichnet, daß die Datenauswahlschaltung Einrichtungen (22) zur Speicherung veränderlicher Informationen aufweist, die die Art und Weise bestimmen, in der die Datenauswahl durch Steuerung entweder der Graphik- oder der Textdaten erfolgt.

3. Bildsignalgenerator nach Anspruch 1 oder 2, dadurch gekennzeichnet, daß die Datenauswahlschaltung so ausgelegt ist, daß die Datenauswahl durch die Steuerung der Graphikdaten bewirkt wird.

4. Bildsigalgenerator nach Anspruch 2, dadurch gekennzeichnet, daß die Speichereinchtung ein RAM (22) aufweist, das so geschaltet ist, daß es zum Empfang der veränderlichen Informationen als Dateneingang die Graphikdaten als Addresseingang erhält.

5. Bildsignalgenerator nach Anspruch 2 oder 4, dadurch gekennzeichnet, daß der Speicher (22) so ausgelegt ist, daß er einen Code mit einer Mehrzahl von Bits speichern kann, die jeweils einer entsprechenden, besonderen Form der steuernden Graphik- oder Textdaten zugeordnet sind und jeweils einen Wert haben, der bestimmt, ob Graphik- oder Textdaten ausgewählt werden.

6. Computer, gekennzeichnet durch einen Bildsignalgenerator nach einem der vorhergehenden Ansprüche.

**Revendications**

1. Générateur de signaux d'affichage pour produire des signaux vidéo (RGB) servant à commander un écran d'affichage du type à balayage de trame en couleurs, et pour représenter des images superposées de données de graphiques et de textes, mémorisées dans des moyens de mémoire respectifs (12; 13, 20), un circuit (22, 23) de sélection de données accouplé de manière à recevoir les données de graphiques et de textes à partir desdits moyens de mémoire (12; 13,20) et pouvant agir de manière à mélanger lesdites données de graphiques et de textes de manière à produire lesdits signaux vidéo (RGB), caractérisè en ce que lesdites données de graphiques et de textes sont lues simultanément à partir desdits moyens de mémoire (12; 13,20) et en ce que ledit circuit (22,23) de sélection des données peut agir, pour chaque élément d'image situé sur l'écran d'affichage, pour sélectionner des données de graphiques et des données de textes, ladite sélection des données étant exécutée sous la commande de l'une desdites données de graphiques et de textes

2. Générateur de signaux d'affichage selon la revendication 1, caractérisé en ce que ledit circuit de sélection de données comprend des moyens (22) servant à mémoriser une information modifiable déterminant la manière dont la sèlection des données est exécutée sous la commande de l'une desdites données de graphiques et de textes.

3. Générateur de signaux d'affichage selon la revendication 1 ou 2, caractérisé en ce que ledit circuit de sélection de données est adapté pour réaliser ladite sélection des données sous la commande desdites données de graphiques.

4. Générateur de signaux d'affichage selon la revendication 2, caractérisé en ce que lesdits moyens de mémoire comprennent une mémoire RAM (22), qui est agencée de manière à recevoir les données de graphiques sous la forme d'une entrée d'adresses et à recevoir ladite information modifiable en tant qu'entrée de données.

5. Générateur de signaux d'affichage selon la revendication 2 ou 4, caractérisé en ce que lesdits moyens de mémoire (22) sont adaptés pour mémoriser un code comprenant une pluralité de bits associés chacun à une forme particulière respective des données de graphiques et de textes de commande, et possédant chacun une valeur déterminant si la donnée de graphique ou de texte doit être sélectionnée.

6. Ordinateur comportant un générateur de signaux d'affichage selon l'une quelconque des revendications précédentes.

# FIG. 1

# FIG. 2

## FIG.3

| COLOR | R | G | B |
|---|---|---|---|
| BLACK | 0 | 0 | 0 |
| RED | 0 | 0 | 1 |
| GREEN | 0 | 1 | 0 |
| YELLOW | 0 | 1 | 1 |
| BLUE | 1 | 0 | 0 |
| MAGENTA | 1 | 0 | 1 |
| CYAN | 1 | 1 | 0 |
| WHITE | 1 | 1 | 1 |

## FIG.4

| R | G | B | OUTPUT S |
|---|---|---|---|
| 0 | 0 | 0 | D0 |
| 0 | 0 | 1 | D1 |
| 0 | 1 | 0 | D2 |
| 0 | 1 | 1 | D3 |
| 1 | 0 | 0 | D4 |
| 1 | 0 | 1 | D5 |
| 1 | 1 | 0 | D6 |
| 1 | 1 | 1 | D7 |

## FIG.5

| COLOR | R | G | B | OUTPUT S |
|---|---|---|---|---|
| BLACK | 0 | 0 | 0 | 1 |
| RED | 0 | 0 | 1 | 0 |
| GREEN | 0 | 1 | 0 | 1 |
| YELLOW | 0 | 1 | 1 | 1 |
| BLUE | 1 | 0 | 0 | 0 |
| MAGENTA | 1 | 0 | 1 | 0 |
| CYAN | 1 | 1 | 0 | 1 |
| WHITE | 1 | 1 | 1 | 0 |